# FASCICULE DE BREVET EUROPEEN

(11) **EP 4 402 347 B1**
(45) Date de publication et mention de la délivrance du brevet: **19.11.2025**
(21) Numéro de dépôt: 22783549.3
(22) Date de dépôt: 13.09.2022
(51) Int. Cl.: F01D 5/30

(54) **AUBE MOBILE POUR TURBINE DE TURBOMACHINE, COMPRENANT UNE ÉCHASSE ÉQUIPÉE D'EXCROISSANCES DE RETENUE RADIALE DE L'AUBE**
LAUFSCHAUFEL FÜR EINE TURBINE EINES TURBINENTRIEBWERKS MIT EINER NEIGUNG MIT VORSPRÜNGEN ZUM RADIALEN HALTEN DER SCHAUFEL
MOVING BLADE FOR A TURBINE OF A TURBINE ENGINE, COMPRISING A STILT EQUIPPED WITH PROJECTIONS FOR RADIALLY RETAINING THE BLADE

(30) Priorité: 14.09.2021 FR 2109631
(43) Date de publication de la demande: 24.07.2024
(73) Titulaire: SAFRAN AIRCRAFT ENGINES, 75015 Paris (FR)
(72) Inventeur: DURAND, Yannick, 77550 MOISSY-CRAMAYEL (FR)
(74) Mandataire: Santarelli
(86) Numéro de dépôt international: PCT/FR2022/051722
(87) Numéro de publication internationale: WO 2023/041868

(56) Documents cités:
- EP-A1- 0 068 923
- FR-A1- 3 092 612
- US-A1- 2008 273 982
- US-A1- 2016 146 016

## Description

### DOMAINE TECHNIQUE

L'invention concerne le domaine des aubes mobiles de turbine pour turbomachine, de préférence pour turbomachine d'aéronef. Elle concerne plus particulièrement les moyens mis en œuvre pour assurer la retenue radiale des aubes par rapport au disque de turbine, afin d'éviter qu'à l'arrêt et sous l'effet de la gravité, certaines aubes ne se déplacent vers l'axe de la roue de manière trop conséquente.

L'invention s'applique à tout type de turbomachine, tel que par exemple un turboréacteur ou un turbopropulseur.

### ETAT DE LA TECHNIQUE ANTERIEURE

Dans une turbomachine d'aéronef, les roues mobiles de turbine sont généralement réalisées à l'aide d'un disque, à la périphérie duquel sont montées des aubes de turbine. La veine de circulation des gaz est délimitée radialement vers l'intérieur par des plateformes prévues sur les aubes, à proximité de leurs pieds.

Les aubes ont déjà fait l'objet de nombreux développements, et un exemple de conception est par exemple connu du document FR 2 954 797 A1.

En fonctionnement, il est connu de retenir radialement chaque aube mobile à l'aide de son pied, en le logeant dans une rainure de la périphérie du disque de turbine. Pour ce faire, le pied est généralement équipé de deux portées circonférentiellement opposées, respectivement en appui contre les deux dents de la partie périphérique du disque qui délimitent entre elles la rainure recevant le pied. Grâce à ces appuis résultant de la force centrifuge, chaque aube se trouve dans une première configuration de retenue radiale par son pied, l'empêchant de s'échapper radialement vers l'extérieur par rapport au disque de turbine.

Lorsque la turbomachine n'est pas en fonctionnement, c'est-à-dire lorsque le rotor se trouve à l'arrêt, les aubes mobiles de la partie supérieure de la couronne d'aubes peuvent tomber sous l'effet de la gravité, c'est-à-dire se déplacer vers l'axe de la roue. En l'absence de moyens pour stopper ce déplacement radial vers l'intérieur, chaque aube concernée peut voir son pied venir en butée dans le fond de la rainure de la périphérie du disque. S'il est trop important, ce déplacement radial de l'aube peut s'avérer problématique en ce sens qu'il est susceptible de conduire à un désalignement circonférentiel des têtes d'aubes, avec pour éventuelle conséquence un chevauchement préjudiciable de ces têtes lors de la mise en fonctionnement suivante de la turbomachine.

Pour éviter ce risque, il est connu de prévoir deux murets agencés de part et d'autre de l'échasse de l'aube, selon la direction axiale de celle-ci. Chaque muret est issu de la plateforme et s'étend radialement vers l'intérieur jusqu'à forte proximité des dents de la partie périphérique du disque.

Si ces murets donnent satisfaction en ce qu'ils permettent de limiter le déplacement radial de certaines aubes à l'arrêt de la turbomachine, ils constituent néanmoins une solution pénalisant sensiblement la masse globale de l'aube. Roues mobiles de turbine de turbomachine d'aéronef comprenant un disque de turbine et une pluralité d'aubes sont aussi connues de FR 3 092 612 A1 et de US 2016/146016 A1.

### RESUME DE L'INVENTION

Pour répondre au moins partiellement à l'inconvénient mentionné ci-dessus, l'invention a tout d'abord pour objet une roue mobile de turbine de turbomachine, selon les caractéristiques de la revendication 1.

Avec la solution proposée par la présente invention, la retenue radiale de l'aube, vers l'intérieur, est avantageusement réalisée à l'aide de simples excroissances équipant l'échasse. Ces excroissances restent simples à réaliser, fiables, et contribuent à limiter la masse globale de l'aube en comparaison des solutions à murets connues de l'art antérieur.

En outre, la réduction de masse engendrée par la mise en œuvre des excroissances, associée à la suppression de tout ou partie des murets sur l'aube, conduit à une réduction des sollicitations mécaniques s'exerçant sur le pied d'aube en fonctionnement. Cela permet également de limiter le dimensionnement du pied d'aube, ainsi que celui des dents de la partie périphérique du disque de turbine.

L'invention comporte de préférence au moins l'une quelconque des caractéristiques optionnelles suivantes, prises isolément ou en combinaison.

De préférence, chaque excroissance de retenue radiale de l'aube présente une forme se rétrécissant en s'écartant circonférentiellement de l'échasse, par exemple une forme générale triangulaire. D'autres formes sont néanmoins envisageables, comme une forme de bourrelet, sans sortir du cadre de l'invention.

De préférence, chaque excroissance de retenue radiale de l'aube s'étend sur toute ou partie de la longueur axiale de l'échasse.

De préférence, chacune des première et seconde cavités est également délimitée en partie, selon une direction axiale de l'aube, par une première et une seconde paroi de raccordement, l'aube comprenant également un becquet amont ainsi qu'un becquet aval, tous deux écartés de la plateforme selon la direction de la hauteur, la première paroi de raccordement reliant le becquet amont à une extrémité axiale amont de la plateforme, et la seconde paroi reliant le becquet aval à une extrémité axiale aval de la plateforme, chaque excroissance de retenue radiale de l'aube étant agencée radialement entre les becquets amont et aval, et le pied d'aube.

De préférence, l'aube comporte en outre une première et une seconde paroi de raidissement s'étendant respectivement à partir du becquet amont et du becquet aval, en direction du pied d'aube, les première et seconde parois de raidissement participant également chacune à délimiter les première et seconde cavités, et chaque excroissance de retenue radiale de l'aube est agencée radialement entre les parois de raidissement, et le pied d'aube.

De préférence, dans une première configuration de retenue radiale de l'aube par son pied, radialement vers l'intérieur par rapport au disque de turbine, chaque surface de butée définit un jeu avec la surface radialement extérieure de sa dent de disque associée, le jeu étant par exemple compris entre 0,10 et 0,15 mm.

De préférence, dans une seconde configuration de retenue radiale de l'aube par les excroissances, radialement vers l'extérieur par rapport au disque de turbine, chaque surface de butée définit, avec la surface radialement extérieure de sa dent de disque associée, une zone de contact s'étendant sur une longueur circonférentielle par exemple supérieure ou égale à 1 mm.

L'invention a également pour objet une turbine de turbomachine comprenant au moins une roue mobile telle que décrite ci-dessus, la turbine étant préférentiellement une turbine basse pression, mais pouvant alternativement être une turbine haute pression.

Enfin, l'invention a pour objet une turbomachine d'aéronef comprenant au moins une telle turbine, la turbomachine étant préférentiellement un turboréacteur à double flux et à double corps.

D'autres avantages et caractéristiques de l'invention apparaîtront dans la description détaillée non limitative ci-dessous.

### BREVE DESCRIPTION DES DESSINS

Cette description sera faite au regard des dessins annexés parmi lesquels ;
[Fig. 1] représente une vue schématique en coupe axiale d'un turboréacteur à double flux selon l'invention ;
[Fig. 2] représente une vue en perspective d'une aube mobile de turbine du turboréacteur montré sur la figure 1, et se présentant sous la forme d'un mode de réalisation préféré de l'invention ;
[Fig. 3] représente une vue en perspective partielle et agrandie de l'aube montrée sur la figure précédente ;
[Fig. 4] représente une vue de face d'une partie d'une roue mobile de turbine, comprenant des aubes telles que celle représentée sur les figures 2 et 3 ;
[Fig. 5] est une vue de face encore plus agrandie d'une partie de la roue montrée sur la figure 4, avec l'une des aubes de la roue représentée dans une première configuration de retenue radiale par son pied ; et
[Fig. 6] est une vue de face similaire à celle de la figure 5, avec la même aube représentée dans une seconde configuration de retenue radiale par les excroissances équipant l'échasse de cette aube.

### EXPOSE DETAILLE DE MODES DE REALISATION

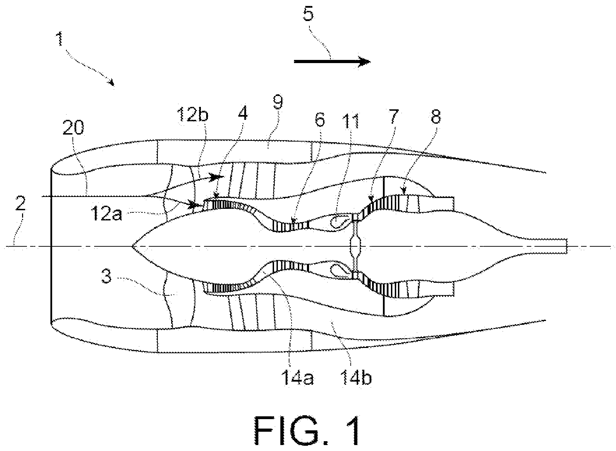

En référence tout d'abord à la figure 1, il est représenté une turbomachine 1 d'aéronef, selon un mode de réalisation préféré de l'invention. Il s'agit ici d'un turboréacteur à double flux et à double corps. Néanmoins, il pourrait s'agir d'une turbomachine d'un autre type, par exemple un turbopropulseur, sans sortir du cadre de l'invention.

La turbomachine 1 présente un axe longitudinal 2 autour duquel s'étendent ses différents composants. Elle comprend, d'amont en aval selon une direction principale 5 d'écoulement des gaz à travers cette turbomachine, une soufflante 3, un compresseur basse pression 4, un compresseur haute pression 6, une chambre de combustion 11, une turbine haute pression 7 et une turbine basse pression 8.

De manière conventionnelle, après avoir traversé la soufflante, l'air se divise en un flux primaire central 12a et un flux secondaire 12b qui entoure le flux primaire. Le flux primaire 12a s'écoule dans une veine principale 14a de circulation des gaz traversant les compresseurs 4, 6, la chambre de combustion 11 et les turbines 7, 8. Le flux secondaire 12b s'écoule quant à lui dans une veine secondaire 14b délimitée radialement vers l'extérieur par un carter moteur, entouré d'une nacelle 9.

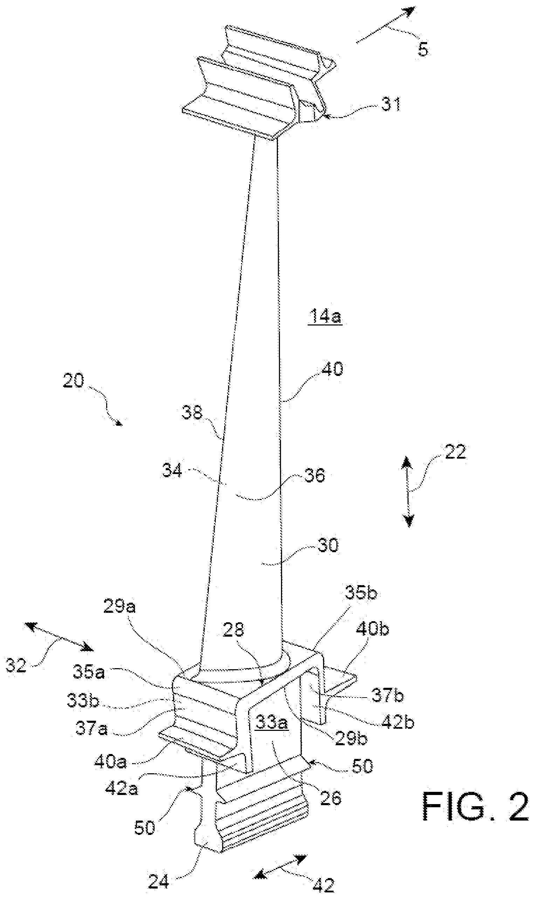

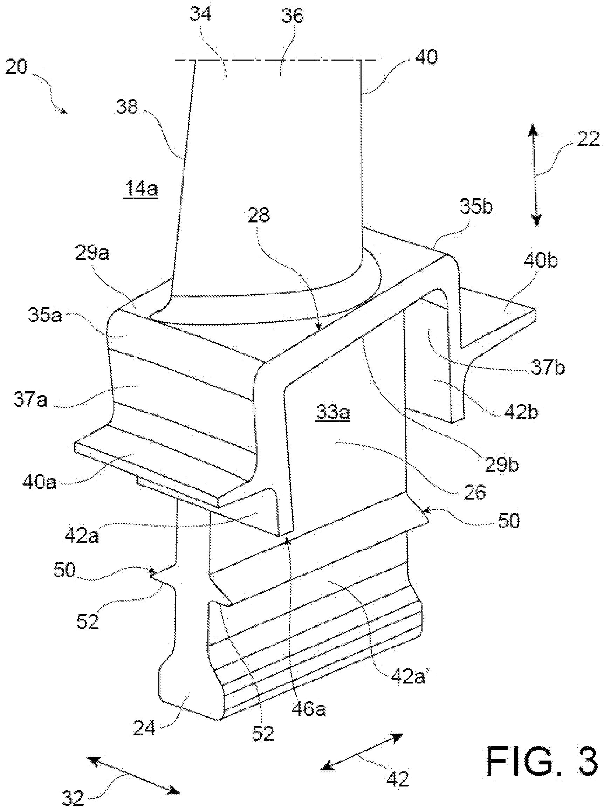

Les figures 2 et 3 représentent une aube mobile 20 selon un mode de réalisation préféré de l'invention, cette aube 20 étant destinée à équiper une roue mobile de l'une quelconque des turbines 7 et 8, et en particulier la turbine basse pression 8. La roue mobile est, de manière classique, centrée sur l'axe 2.

Les éléments de l'aube 20 seront présentés dans l'ordre tel qu'ils apparaissent successivement selon la direction de la hauteur 22 de cette aube, de bas vers le haut, ou encore de l'intérieur vers l'extérieur puisque cette direction de la hauteur 22 correspond également à la direction radiale de l'aube et de la roue mobile de turbine dans laquelle cette aube est destinée à être intégrée.

De manière classique, l'aube 20 comporte un pied d'aube 24, une échasse 26, une plateforme 28, une pale 30 constituant la partie aérodynamique de l'aube, et éventuellement une structure de tête 31 comprenant une autre plateforme.

Le pied d'aube 24 adopte une forme extérieure dite « en sapin » ou en « bulbe », permettant son insertion dans une rainure de logement d'aube correspondant d'un disque de turbine destiné à porter les aubes mobiles. L'échasse 26 présente habituellement une épaisseur faible selon une direction circonférentielle 32 de l'aube et de la roue, tandis que la plateforme 28 s'étend également de part et d'autre de l'échasse 26 selon cette même direction circonférentielle 32.

Plus précisément, la plateforme 28 peut s'étendre circonférentiellement au-delà de l'intrados 34 et de l'extrados 36 de la pale 30, et peut également s'étendre au-delà d'un bord d'attaque 38 et d'un bord de fuite 40 de la pale, selon une direction axiale 42 de l'aube et de la roue à laquelle cette aube est destinée à être intégrée.

Avec sa surface extérieure 29a, dite première surface à partir de laquelle s'étend la pale 30 selon la direction 22, la plateforme 28 délimite radialement vers l'intérieur la veine principale 14a de circulation des gaz.

Avec sa surface intérieure 29b, dite seconde surface opposée à la première surface 29a selon la direction 22, et à partir de laquelle s'étend l'échasse 26 dans cette même direction sensiblement dans le prolongement de la pale 30, la plateforme 28 délimite radialement vers l'extérieur une première cavité 33a ainsi qu'une seconde cavité 33b, agencées de part et d'autre de l'échasse 26 selon la direction 32.

La plateforme 28 comporte une extrémité axiale amont 35a, ainsi qu'une extrémité axiale aval 35b. Une première paroi de raccordement 37a s'étend à partir de l'extrémité axiale amont 35a de la plateforme, radialement vers l'intérieur et parallèlement ou sensiblement parallèlement aux directions 22, 32, jusqu'à un becquet amont 40a en saillie axialement vers l'amont. De manière analogue, une seconde paroi de raccordement 37b s'étend à partir de l'extrémité axiale aval 35b de la plateforme, radialement vers l'intérieur et parallèlement ou sensiblement parallèlement aux directions 22, 32, jusqu'à un becquet amont 40b en saillie axialement vers l'aval.

La première paroi de raccordement 37a délimite en partie, axialement vers l'amont, chacune des deux cavités 33a, 33b prévues sous la plateforme 28. De même, la seconde paroi de raccordement 37b délimite également en partie, axialement vers l'aval, chacune de ces deux cavités 33a, 33b.

Les becquets 40a, 40b sont ainsi décalés radialement vers l'intérieur par rapport à la plateforme 28, en étant davantage rapprochés du pied 24. Un rayon de raccordement est préférentiellement prévu au niveau de la jonction entre chaque becquet 40a, 40b et sa paroi de raccordement associée 37a, 37b, et il en est de même entre chacune de ces parois 37a, 37b et la plateforme 28.

A partir du becquet amont 40a, il peut être prévu une première paroi de raidissement 42a s'étendant radialement vers l'intérieur et parallèlement ou sensiblement parallèlement aux directions 22, 32, sur une hauteur limitée. Le chant intérieur de cette première paroi de raidissement 42a se trouve à grande distance radiale du pied 24, et ne recouvre donc axialement qu'une partie radialement extérieure de l'échasse 26.

De manière analogue, à partir du becquet aval 40b, il peut être prévu une seconde paroi de raidissement 42b s'étendant radialement vers l'intérieur et parallèlement ou sensiblement parallèlement aux directions 22, 32, également sur une hauteur limitée.

Les parois de raidissement 42a, 42b, également dénommés « murets », peuvent se situer respectivement dans les prolongements radiaux des parois de raccordement 37a, 37b, ou bien être légèrement décalées axialement de ces dernières, comme cela est représenté sur les figures 2 et 3.

La première paroi de raidissement 42a délimite en partie, axialement vers l'amont, chacune des deux cavités 33a, 33b prévues sous la plateforme 28, de même que la seconde paroi de raidissement 42b délimite également en partie, axialement vers l'aval, chacune de ces deux cavités 33a, 33b.

La première cavité 33a reste ouverte circonférentiellement dans la direction opposée à l'échasse 26, tandis qu'elle reste également ouverte radialement dans la direction opposée à la plateforme 28. Dans la direction circonférentielle 32, la première cavité 33a s'ouvre ainsi au niveau d'une première ouverture circonférentielle 44a référencée sur la figure 3. Cette première ouverture 44a est délimitée par une première zone 46a de jonction avec la seconde cavité 33b d'une aube directement consécutive sur la roue, comme cela est connu de l'homme du métier. La première zone de jonction 46a se trouve au niveau d'une extrémité circonférentielle basse de l'aube, et présente une forme générale de U retourné, ouverte radialement vers l'intérieur.

L'une des particularités de l'invention réside dans l'absence des première et seconde parois de raidissement 42a, 42b sous les becquets, ou bien dans le fait qu'elles soient maintenues mais selon une hauteur faible, de manière à réduire considérablement leur masse. Dans la partie à nu de l'échasse 26, non recouverte axialement par les éléments 37a, 42a, 37b, 42b, une autre particularité de l'invention consiste à prévoir qu'à chacun de ses deux côtés selon la direction circonférentielle 32, cette échasse 26 soit pourvue d'une excroissance 50 de retenue radiale de l'aube.

Chacune des deux excroissances 50 comprend une surface de butée 52 orientée radialement vers l'intérieur, et destinée à coopérer avec une surface radialement extérieure de l'une des deux dents de disque définissant la rainure dans laquelle est logé le pied 24 de l'aube concernée, comme cela sera décrit ultérieurement.

Dans ce mode de réalisation préféré, chaque excroissance 50 de retenue radiale de l'aube présente une forme se rétrécissant en s'écartant circonférentiellement de l'échasse 26, en adoptant une forme générale triangulaire, ou de bourrelet. Chaque excroissance 50 est préférentiellement réalisée d'une seule pièce avec l'échasse, en s'étendant sur une longueur circonférentielle limitée, inférieure strictement à celle des éléments précités 37a, 37b, 40a, 40b, 42a, 42b, et par exemple identique ou similaire à celle de la longueur circonférentielle de la partie du pied 24 la plus étendue selon la direction 32. Elle s'étend également sur une longueur axiale correspondant par exemple à toute la longueur axiale de l'échasse 26, comme cela a été représenté sur les figures 2 et 3. Alternativement, chaque excroissance 50 pourrait ne s'étendre que sur une partie de la longueur axiale de l'échasse 26, par exemple en étant formée par des tronçons axiaux espacés axialement les uns des autres.

Chaque excroissance de retenue radiale 50 est agencée radialement entre d'une part les chants radialement intérieurs des parois de raidissement 42a, 42b, et d'autre part la partie supérieure du pied d'aube 24, tout en restant à distance radialement de chacun de ces éléments 42a, 42b, 24. En outre, chaque excroissance de retenue radiale 50 s'étend axialement entre les parois de raidissement 42a, 42b, donc également entre les becquets 40a, 40b.

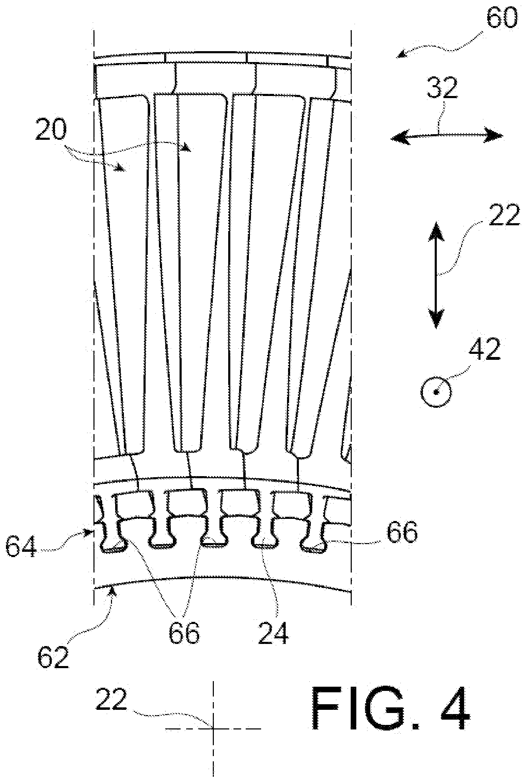

La figure 4 montre une partie d'une roue mobile de turbine 60, comprenant un disque 62 centré sur l'axe 2 et équipé d'une partie périphérique 64 pourvue de rainures axiales 66 pour le logement des aubes 20. Les rainures axiales 66 se succèdent selon la direction circonférentielle 32.

La roue 60 comprend également une couronne d'aubes 20 de conception du type de celle décrite ci-dessus, avec le pied 24 de chaque aube étant logé dans l'une des rainures 66 de la partie périphérique 64 du disque.

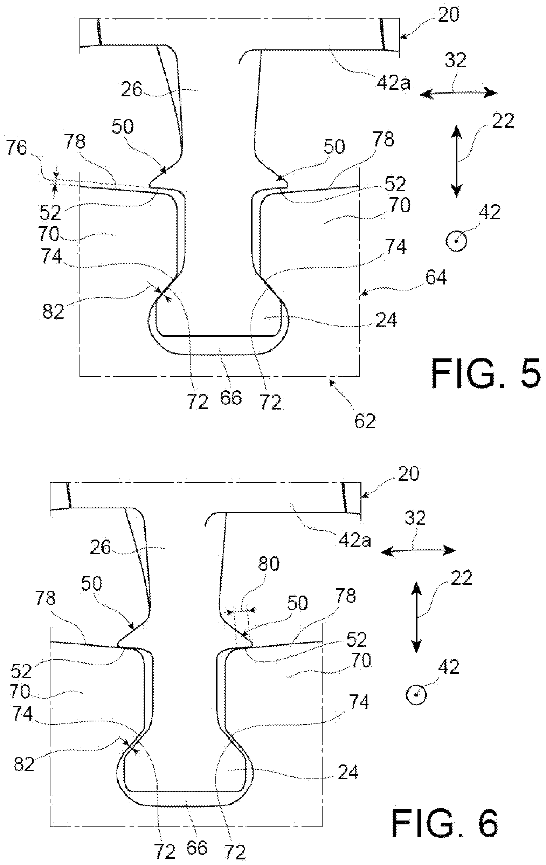

Sur la figure 5, l'aube 20 est représentée dans une première configuration de retenue radiale par son pied 24, cette configuration étant observée en fonctionnement lorsque la force centrifuge conduit le pied d'aube 24 à se plaquer radialement contre une surface intérieure 72 de dents 70. Ces dents 70 sont celles qui forment la partie périphérique 64 du disque, en s'étendant radialement vers l'extérieur et en définissant entre elles, selon la direction 32, les rainures 66 de logement des pieds d'aube.

Ainsi, le pied d'aube 24 est équipé de deux portées circonférentiellement opposées 74, qui, en fonctionnement, sont respectivement en appui contre les deux surfaces 72 de deux dents directement consécutives selon la direction 32, et qui délimitent entre elles la rainure axiale 66 recevant ce pied. Grâce à ces appuis résultant de la force centrifuge, chaque aube se trouve dans la première configuration de retenue radiale par son pied 24, l'empêchant de s'échapper radialement vers l'extérieur par rapport au disque de turbine 62. L'aube 20 est conçue de sorte que dans cette première configuration de retenue radiale, un faible jeu radial 76 subsiste entre la surface de butée 52 de chaque excroissance 50, et la surface radialement extérieure 78 de sa dent de disque associée 70 à laquelle elle fait face. Ce jeu 76 est préférentiellement compris entre 0,10 et 0,15 mm.

Sur la figure 6, l'aube 20 est représentée dans une seconde configuration de retenue radiale par ses excroissances 50. Cette seconde configuration est observée lorsque la turbomachine n'est pas en fonctionnement, c'est-à-dire lorsqu'elle se trouve à l'arrêt, et que les aubes 20 de la partie supérieure de la couronne d'aubes peuvent tomber sous l'effet de la gravité, et se rapprocher de l'axe de la roue. Ce déplacement est limité à la consommation du jeu radial 76, décrit en référence à la figure 5. Une fois ce jeu 76 consommé et l'entrée en contact des excroissances 50 avec les deux dents 70, chaque surface de butée 52 définit, avec la surface radialement extérieure 78 de sa dent de disque associée 70, une zone / interface de contact s'étendant sur une longueur circonférentielle 80 supérieure ou égale à 1 mm. Cela conduit par ailleurs les portées 74 du pied d'aube 24 à se décaler radialement des surfaces intérieures 72 des dents 70, en laissant apparaitre un faible jeu 82 entre celles-ci.

Bien entendu, diverses modifications peuvent être apportées par l'homme du métier à l'invention qui vient d'être décrite, uniquement à titre d'exemples non limitatifs, et dont la portée est définie par les revendications annexées.

## Revendications

1. Roue mobile (60) de turbine de turbomachine d'aéronef, comprenant un disque de turbine (62) comportant une partie périphérique (64) pourvue de rainures (66) de logement d'aubes se succédant selon une direction circonférentielle (32) de la roue, celle-ci comprenant également une pluralité d'aubes (20), le pied (24) de chaque aube étant logé dans l'une des rainures (66) de la partie périphérique (64) du disque, chaque aube comprenant successivement selon une direction radiale (22) de hauteur de l'aube vis-à-vis de l'axe (2), un pied d'aube (24), une échasse (26), une plateforme (28), ainsi qu'une pale (30), ladite rainure de logement (66) étant définie entre deux dents (70) de disque directement consécutives selon une direction circonférentielle (32) autour de l'axe (2),
la plateforme (28) comprenant une première surface (29a) ainsi qu'une seconde surface (29b) opposée à la première selon la direction radiale (22), la première surface (29a), à partir de laquelle s'étend la pale (30), étant destinée à délimiter une veine de circulation des gaz (14a), et la seconde surface (29b), à partir de laquelle s'étend l'échasse (26), délimitant en partie une première (33a) et une seconde cavité (33b) agencées de part et d'autre de l'échasse (26) selon la direction circonférentielle (32),
**caractérisée en ce qu'**à chacun de ses deux côtés selon la direction circonférentielle (32), l'échasse (26) est pourvue d'une excroissance (50) de retenue radiale de l'aube, chaque excroissance (50) comprenant une surface de butée (52) orientée radialement vers l'intérieur et destinée à coopérer avec une surface radialement extérieure (78) d'une dent (70) de disque définissant la rainure dans laquelle est logé le pied (24) de l'aube concernée.

2. Roue mobile selon la revendication 1, **caractérisée en ce que** chaque excroissance (50) de retenue radiale de l'aube présente une forme se rétrécissant en s'écartant circonférentiellement de l'échasse (26), par exemple une forme générale triangulaire.

3. Roue mobile selon la revendication 1 ou 2, **caractérisée en ce que** chaque excroissance (50) de retenue radiale de l'aube s'étend sur toute ou partie de la longueur axiale de l'échasse (26).

4. Roue mobile selon l'une quelconque des revendications précédentes, **caractérisée en ce que** chacune des première et seconde cavités (33a, 33b) est également délimitée en partie, selon une direction axiale (42) de l'aube, par une première (37a) et une seconde paroi de raccordement (37b),
l'aube comprenant également un becquet amont (40a) ainsi qu'un becquet aval (40b), tous deux écartés de la plateforme (28) selon la direction radiale (22), la première paroi de raccordement (37a) reliant le becquet amont (40a) à une extrémité axiale amont (35a) de la plateforme, et la seconde paroi (37b) reliant le becquet aval (40b) à une extrémité axiale aval (35b) de la plateforme,
chaque excroissance (50) de retenue radiale de l'aube étant agencée radialement entre les becquets amont et aval (40a, 40b), et le pied d'aube (24).

5. Roue mobile selon la revendication 4, **caractérisée en ce que** l'aube comporte en outre une première (42a) et une seconde paroi de raidissement (42b) s'étendant respectivement à partir du becquet amont (40a) et du becquet aval (40b), en direction du pied d'aube (24), les première et seconde parois de raidissement (42a, 42b) participant également chacune à délimiter les première et seconde cavités (33a, 33b), et **en ce que** chaque excroissance (50) de retenue radiale de l'aube est agencée radialement entre les parois de raidissement (42a, 42b), et le pied d'aube (24).

6. Roue mobile selon l'une quelconque des revendications précédentes, **caractérisée en ce que** dans une première configuration de retenue radiale de l'aube par son pied (24), radialement vers l'intérieur par rapport au disque de turbine (62), chaque surface de butée (52) définit un jeu (76) avec la surface radialement extérieure (78) de sa dent de disque associée (70).

7. Roue mobile selon l'une quelconque des revendications précédentes, **caractérisée en ce que** dans une seconde configuration de retenue radiale de l'aube par les excroissances (50), radialement vers l'extérieur par rapport au disque de turbine (62), chaque surface de butée (52) définit, avec la surface radialement extérieure (78) de sa dent de disque associée (70), une zone de contact s'étendant sur une longueur circonférentielle (80).

8. Turbine (8) de turbomachine comprenant au moins une roue mobile (60) selon l'une quelconque des revendications précédentes, la turbine étant préférentiellement une turbine basse pression.

9. Turbomachine (1) d'aéronef comprenant au moins une turbine (8) selon la revendication 8, la turbomachine étant préférentiellement un turboréacteur à double flux et à double corps.

## Patentansprüche

1. Bewegliches Turbinenrad (60) von Flugzeugturbomaschinen, umfassend eine Turbinenscheibe (62), die einen Umfangsteil (64) mit Nuten (66) zur Aufnahme von Schaufeln aufweist, die in einer Umfangsrichtung (32) des Rads aufeinanderfolgen, wobei dieses auch eine Vielzahl von Schaufeln (20) umfasst, wobei der Fuß (24) jeder Schaufel in einer der Nuten (66) des Umfangsteils (64) der Scheibe gelagert ist, wobei jede Schaufel nacheinander in einer radialen Richtung (22) der Schaufelhöhe gegenüber der Achse (2), einen Schaufelfuß (24), eine Stütze (26), eine Plattform (28) sowie ein Blatt (30) umfasst, wobei die Aufnahmenut (66) zwischen zwei direkt aufeinanderfolgenden Scheibenzähnen (70) in einer Umfangsrichtung (32) um die Achse (2) definiert ist,
wobei die Plattform (28) eine erste Fläche (29a) sowie eine zweite Fläche (29b) umfasst, die der ersten in radialer Richtung (22) entgegengesetzt ist, wobei die erste Fläche (29a), von der aus sich das Blatt (30) erstreckt, dazu bestimmt ist, eine Gasströmungsleitung (14a) abzugrenzen, und die zweite Fläche (29b), von der aus sich die Stütze (26) erstreckt, die teilweise einen ersten (33a) und einen zweiten Hohlraum (33b) abgrenzt, die auf beiden Seiten der Stütze (26) entsprechend der Umfangsrichtung (32) angeordnet sind,
**dadurch gekennzeichnet, dass** an jeder seiner beiden Seiten entsprechend der Umfangsrichtung (32) die Stütze (26) mit einem radialen Haltewulst (50) versehen ist, wobei jeder Wulst (50) eine radial nach innen gerichtete Anschlagfläche (52) umfasst und dazu bestimmt ist, mit einer radial außenliegenden Oberfläche (78) eines Scheibenzahns (70) zusammenzuwirken, der die Nut definiert, in der der Fuß (24) der betreffenden Leitschaufel gelagert ist.

2. Bewegliches Rad nach Anspruch 1, **dadurch gekennzeichnet, dass** jeder radiale Haltewulst (50) der Schaufel eine Form besitzt, die sich beim Abweichen umlaufend von der Stütze (26) verengt, beispielsweise eine allgemeine dreieckige Form.

3. Bewegliches Rad nach Anspruch 1 oder 2, **dadurch gekennzeichnet, dass** sich jeder radiale Haltewulst (50) der Schaufel über die gesamte oder einen Teil der axialen Länge der Stütze (26) erstreckt.

4. Bewegliches Rad nach einem der vorhergehenden Ansprüche, **dadurch gekennzeichnet, dass** jeder des ersten und des zweiten Hohlraums (33a, 33b) auch teilweise, in einer axialen Richtung (42) der Schaufel, durch eine erste (37a) und eine zweite Verbindungswand (37b) begrenzt ist,
wobei die Schaufel ferner einen vorgelagerten Spoiler (40a) sowie einen nachgelagerten Spoiler (40b) umfasst, die beide in radialer Richtung (22) von der Plattform (28) entfernt sind, wobei die erste Verbindungswand (37a) den vorgelagerten Spoiler (40a) mit einem vorgelagerten axialen Ende (35a) der Plattform verbindet, und die zweite Wand (37b) den nachgelagerten Spoiler (40b) mit einem nachgelagerten axialen Ende (35b) der Plattform verbindet,
wobei jeder radiale Haltewulst (50) der Schaufel radial zwischen dem vorgelagerten und dem nachgelagerten Spoiler (40a, 40b) und dem Schaufelfuß (24) angeordnet ist.

5. Bewegliches Rad nach Anspruch 4, **dadurch gekennzeichnet, dass** die Schaufel ferner eine erste (42a) und eine zweite Versteifungswand (42b) aufweist, die sich jeweils von dem vorgelagerten Spoiler (40a) und dem nachgelagerten Spoiler (40b) in Richtung des Schaufelfußes (24) erstrecken, wobei die erste und zweite Versteifungswand (42a, 42b) ebenfalls jeweils an der Begrenzung des ersten und des zweiten Hohlraums (33a, 33b) beteiligt sind, und dass jeder radiale Haltewulst (50) der Schaufel radial zwischen den Versteifungswänden (42a, 42b) und dem Schaufelfuß (24) angeordnet ist.

6. Bewegliches Rad nach einem der vorhergehenden Ansprüche, **dadurch gekennzeichnet, dass** jede Anschlagfläche (52) in einer ersten radialen Haltekonfiguration der Schaufel durch seinen Fuß (24), radial nach innen bezogen auf die Turbinenscheibe (62), einen Spielraum (76) mit der radial außenliegenden Oberfläche (78) seines zugehörigen Scheibenzahns (70) definiert.

7. Bewegliches Rad nach einem der vorhergehenden Ansprüche, **dadurch gekennzeichnet, dass** in einer zweiten radialen Haltekonfiguration der Schaufel durch die Wulste (50), radial nach außen bezogen auf die Turbinenscheibe (62), jede Anschlagfläche (52) mit der radial außenliegenden Oberfläche (78) ihres zugehörigen Scheibenzahns (70) einen sich über eine Umfangslänge (80) erstreckenden Kontaktbereich definiert.

8. Turbine (8) einer Turbomaschine, die mindestens ein bewegliches Rad (60) nach einem der vorhergehenden Ansprüche umfasst, wobei die Turbine vorzugsweise eine Niederdruckturbine ist.

9. Flugzeugturbomaschine (1), die mindestens eine Turbine (8) nach Anspruch 8 umfasst, wobei die Turbomaschine vorzugsweise ein Zweikreis-Turbostrahltriebwerk mit zwei Gehäusen ist.

## Claims

1. A turbine rotor wheel (60) of an aircraft turbomachine, comprising a turbine disc (62) including a peripheral portion (64) provided with grooves (66) for housing blades which are succeeding each other in a circumferential direction (32) of the wheel, said wheel also comprising a plurality of blades (20), the root (24) of each blade being housed in one of the grooves (66) of the peripheral portion (64) of the disc, each blade comprising successively, in a radial direction (22) of height of the blade relative to the axis (2), a blade root (24), a stilt (26), a platform (28), as well as a vane (30), the blade root being intended to be housed in a blade housing groove (66) provided on a peripheral portion (64) of a turbine disc (62) of the rotor wheel, said housing groove (66) being defined between two disc teeth (70) which are directly consecutive in a circumferential direction (32) about the axis (2),
the platform (28) comprising a first surface (29a) as well as a second surface (29b) which is opposite to the first surface in the radial direction (22), the first surface (29a), from which the vane (30) extends, being intended to delimit a gas flow path (14a), and the second surface (29b), from which the stilt (26) extends, partially delimiting a first (33a) and a second cavity (33b) arranged on either side of the stilt (26) in the circumferential direction (32),
**characterised in that** on each of the two sides thereof, in the circumferential direction (32), the stilt (26) is provided with a protrusion (50) for radially retaining the blade, each protrusion (50) comprising a stop surface (52) which is radially inwardly directed and intended to cooperate with a radially outer surface (78) of a disc tooth (70) defining a groove in which the root (24) of the concerned blade is housed.

2. The turbine rotor wheel according to claim 1, **characterised in that** each protrusion (50) for radially retaining the blade has a shape which narrows by being circumferentially spaced from the stilt (26), for example a general triangular shape.

3. The turbine rotor wheel according to claim 1 or 2, **characterised in that** each protrusion (50) for radially retaining the blade extends over all or part of the axial length of the stilt (26).

4. The turbine rotor wheel according to any one of the preceding claims, **characterised in that** each of the first and second cavities (33a, 33b) is also partially delimited, in an axial direction (42) of the blade, by first (37a) and second (37b) connecting walls,
the blade also comprising an upstream spoiler (40a) as well as a downstream spoiler (40b), both separated from the platform (28) in the radial direction (22), the first connecting wall (37a) connecting the upstream spoiler (40a) to an upstream axial end (35a) of the platform, and the second wall (37b) connecting the downstream spoiler (40b) to a downstream axial end (35b) of the platform,
each protrusion (50) for radially retaining the blade being arranged radially between the upstream and downstream spoilers (40a, 40b), and the blade root (24).

5. The turbine rotor wheel according to claim 4, **characterised in that** it further comprises first (42a) and second (42b) stiffening walls extending respectively from the upstream spoiler (40a) and the downstream spoiler (40b), in the direction of the blade root (24), the first and second stiffening walls (42a, 42b) also each participating in delimiting the first and second cavities (33a, 33b), and **in that** each protrusion (50) for radially retaining the blade is arranged radially between the stiffening walls (42a, 42b) and the blade root (24).

6. The turbine rotor wheel according to any one of the preceding claims, **characterised in that** in a first configuration of radial retention of the blade by the root (24) thereof, radially inwardly relative to the turbine disc (62), each stop surface (52) defines a clearance (76) with the radially outer surface (78) of the associated disc tooth (70) thereof.

7. The turbine rotor wheel according to any one of the preceding claims, **characterised in that** in a second configuration of radial retention of the blade by the protrusions (50), radially outwardly relative to the turbine disc (62), each stop surface (52) defines, with the radially outer surface (78) of the associated disk tooth (70) thereof, a contact area extending over a circumferential length (80).

8. A turbomachine turbine (8) comprising at least one rotor wheel (60) according to any one of the preceding claims, the turbine preferably being a low-pressure turbine.

9. An aircraft turbomachine (1) comprising at least one turbine (8) according to claim 8, the turbomachine preferably being a bypass turbojet engine.
